# EUROPEAN PATENT SPECIFICATION

(11) **EP 0 680 581 B1**
(45) Date of publication and mention of the grant of the patent: **16.06.1999**
(21) Application number: 94906649.2
(22) Date of filing: 20.01.1994
(51) Int. Cl.: F16L 58/10, B29C 61/06

(54) **HEAT-RECOVERABLE ARTICLE**
WÄRMERÜCKSTELLBARER GEGENSTAND
ARTICLE THERMO-REFORMABLE

(30) Priority: 21.01.1993 US 6890
(43) Date of publication of application: 08.11.1995
(73) Proprietor: RAYCHEM CORPORATION, Menlo Park, CA 94025-1164 (US)
(72) Inventor: PIESLAK, George, Atherton, CA 94025 (US); WALLACE, Barnie, A., Jr., Bonita, CA 91902 (US); GREUEL, Walter, J., Jr., Bonita, CA 91902 (US)
(74) Representative: Auckland Cooke, Jacqueline
(86) International application number: US9400554
(87) International publication number: WO9417324

(56) References cited:
- DE-A- 1 504 803
- GB-A- 2 023 021
- GB-A- 2 048 720
- US-A- 4 200 676

## Description

### BACKGROUND OF THE INVENTION

### Field of the Invention

This invention relates to dimensionally recoverable articles, particularly heat-recoverable articles which are suitable for providing protection to pipes, pipe joints, and structural elements.

### Introduction to the Invention

In order to protect steel or other metal pipes, pipelines, and structural elements such as bridge supports or pilings from corrosion, abrasion, or degradation due to exposure to sun, soil, moisture, and other elements, it is common to apply a protective layer to the exterior of the pipe or structural element. The protective layer is often polymeric and may be in the form of a polymer tape which is coated with a mastic layer and is then applied to the pipe, a polymer layer which is sprayed or painted onto the pipe, or a fusion bonded epoxy coating. Alternatively, the protective layer may be in form of a heat-recoverable article, i.e. a heat-shrinkable polymeric article such as a sleeve, sheet, or tape, in combination with a heat-activatable sealant or a mastic, which is recovered onto a pipe or substrate. Such heat-recoverable articles are particularly useful in providing protection to pipe welds or joints which are created when pipe is repaired or retrofitted, e.g. when two pieces of pipe are attached to one another. In addition, such heat-recoverable articles are suitable for use to protect steel pipes and gas risers from corrosion in areas such as the splash zone in which they are subject to heavy wave action. Using a heat-recoverable article allows protection to be applied in the field without the need for difficult, time-consuming, and craft-sensitive procedures.

### SUMMARY OF THE INVENTION

Many heat-recoverable articles comprise a polymeric backing layer which is covered, at least in part, by a hot-melt adhesive, i.e. a thermoplastic composition which is a solid at room temperature but which flows and has tack at elevated temperature, or by a mastic, i.e. a sealing material generally of high viscosity which contains either latex or solvent and which has tack at room temperature. One problem which has been observed when a mastic is present is that the low molecular weight components, e.g. asphalt or tackifier, present in the mastic cause the backing layer to swell at elevated temperatures. Such swelling results in delamination of the article from the substrate, leaving the substrate unprotected and subject to corrosion.

We have now found that a heat-recoverable article which comprises an adhesive, particularly a mastic, but which does not swell can be prepared if the backing layer comprises two or more individual polymeric layers. The resulting article has improved swelling resistance and better physical properties than comparable articles which comprise a single layer of polymer. Thus in a first aspect, this invention provides a heat-recoverable article which comprises
(a) a first polymeric backing layer comprising a particulate filler;
(b) a second polymeric inner layer which is substantially free of particulate filler; and
(c) an adhesive layer which comprises a material which is capable of swelling the first layer;
the second polymeric inner layer contacting and lying between the first layer and the adhesive layer.

In a preferred second aspect, this invention provides a heat-recoverable article which has a thickness of 10x and which comprises
(a) the first polymeric backing layer which has a thickness which is at least 0.13 mm (0.005 inch) and is 1x to 5x; and
(b) the second polymeric inner layer which (ii) has a thickness of 5x to 9x.

In another preferred aspect, this invention provides an assembly which comprises
(1) a substrate, e.g. a pipe or a structural element; and
(2) a heat-recoverable article according to the second aspect of the invention which contacts the substrate.

### BRIEF DESCRIPTION OF THE DRAWING

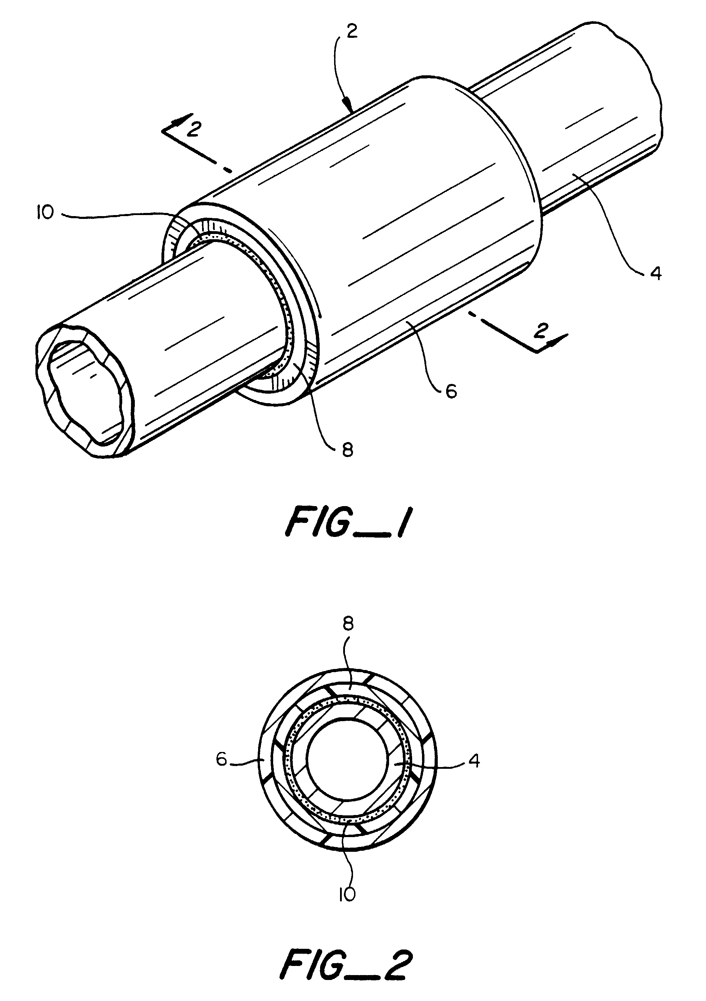

The invention is illustrated in the drawing in which Figure 1 shows a perspective view of a heat-recoverable article of the invention positioned on a substrate;
Figure 2 shows a cross-sectional view of the article of the invention along line 2-2 of Figure 1;
Figure 3 shows a cross-sectional view of an article of the invention covering a weld between two pipes; and
Figure 4 shows a plan view of a substrate on which are recovered heat-recoverable articles of the invention.

### DETAILED DESCRITPION OF THE INVENTION

The article of this invention is heat-recoverable, i.e. the dimensional configuration of the article can be substantially changed when the article is subjected to heat treatment. In their most common form, heat-recoverable articles comprise a heat-shrinkable sleeve made from a polymeric material exhibiting the property of elastic or plastic memory. Alternatively, heat-recoverable articles can be molded into shapes intended for specific applications. Articles comprising such elastic or plastic memory are described, for example, in U.S. Patents Nos. 2,027, 962 (Currie); 3,086,242 (Cook et al); and 3,597,372 (Cook).

The article may be of any convenient shape, e.g. a hollow tube or sleeve or a sheet, which is is generally dependent on the shape of the substrate and is selected to allow easy installation onto the substrate. Conventional heat-recoverable articles used to provide a protective coating to pipes have either a tubular elongate configuration or a flat configuration. Where the diameter of the pipe or other substrate is very large, thus making extrusion of a sufficiently large tubular sleeve difficult, or where no free end of the substrate is available, thus preventing positioning of a tubular sleeve, it is common to use a wrap-around article. A wrap-around article is an article, typically in the form of a sheet, that is installed by wrapping it around the object to be covered so that opposed longitudinal edges overlap. A closure means is applied to secure together the opposed longitudinal edges. Such articles are described in U.S. Patent Nos. 4,200,676 (Caponigro et al) and 4,803,104 (Peigneur et al).

The heat-recoverable articles of the invention comprise at least two layers, a first polymeric backing layer and a second polymeric inner layer. Both the first and the second layers may be composed of any suitable polymer, e.g. polyolefins such as polyethylene including high density polyethylene, medium density polyethylene, and low density polyethylene, polyethylene copolymers such as ethylene/ethyl acrylate copolymer, ethylene/acrylic acid copolymer, ethylene/vinyl acid copolymer, and ethylene/methyl acrylate copolymer, polyethylene terpolymers such as ethylene/ethylene-ethyl acrylate/acrylic acid terpolymer, and polypropylene; fluoropolymers such as polyvinylidene fluoride or ethylene/tetrafluoroethylene copolymer; nylon; or elastomers; or a blend of two or more of these materials. For many applications in which it is important that there be excellent adhesion between the first and the second layers, it is preferred that the layers comprise the same polymer. Under some circumstances, however, it is desirable that the first and second layers comprise different polymers. The use of different polymers may be advantageous if a particular physical property such as excellent tensile strength or adhesion is required at the same time as a particular level of environmental protection, e.g. solvent resistance, is needed. The same polymer may not be suitable to meet both needs.

It is particularly preferred that the first layer comprise components which allow it to meet the physical requirements of being expanded and being exposed to the environment. Thus it is generally the case that the composition from which the first layer is prepared comprises such additional components as rubber, particulate filler, antioxidants, stabilizers, crosslinking agents, pigments, flame retardants, and process aids. The components other than the polymer generally comprise at most 60% by weight, preferably at most 55% by weight, particularly at most 50% by weight, all percentages being in weight percent of the total composition.

Rubber is added to increase the flexibility of the composition, improve its processibility, and enhance its adhesive nature. Among those rubbers which may be used are one or more of natural and synthetic rubbers, particularly ethylene propylene rubbers, ethylene-propylene-diene rubbers (EPDM), butyl rubbers, polyisobutylene rubbers, and thermoplastic elastomers such as those based on styrene-butadiene-styrene or styrene-isoprene-styrene linear or radical block copolymers.

One or more types of particulate filler may be used in the first layer in order to achieve different properties. Particularly preferred is the use of carbon black which acts as a pigment and a reinforcing agent, provides protection during exposure to ultraviolet radiation, and provides resistance to the negative effects of the heating (e.g. cracking) that can occur during recovery. Other particulate fillers such as graphite, zinc oxide, magnesium oxide, titanium dioxide, silica, and calcium carbonate may also be used. If the particulate filler is a conductive filler such as carbon black, it is used in the composition at a loading which is sufficient to render the composition nonconductive when the article is recovered onto the substrate. Thus the resistivity of the first layer when recovered is at least 1 x 10⁶ ohm-cm, preferably at least 1 x 10⁹ ohm-cm, particularly at least 1 x 10¹⁰ ohm-cm, e.g. up to 1 x 10¹⁵ ohm-cm.

It is generally preferred that the second inner layer comprise a polymer composition which contains little if any particulate filler, i.e. that it be substantially free of particulate filler. Thus, in this specification, by "substantially free" it means that the total amount of particulate filler present in the second layer is less than 10% by weight, preferably less than 5% by weight, particularly less than 3% by weight, e.g. 0 to 2% by weight, all percentages being in weight percent of the total composition. The low filler content in the second layer maximizes the effective crystallinity of the polymer. This is important in preventing penetration of moisture, solvents, or other chemical entities through the layer from either the substrate or adhesive layer to the first layer or vice verse. If the first layer is subject to swelling on contact with such chemical entities, it is important that the second layer be resistant to swelling. The second layer may comprise rubber, antioxidants, crosslinking agents, or other similar components. These additional components generally comprise less than 10% by weight, preferably less than 7% by weight, particularly less than 5% by weight, e.g. 0 to 3% by weight, all percentages being in weight percent of the total composition. For some applications in which the first layer comprises carbon black-loaded high density polyethylene, the second layer comprises unfilled high density polyethylene, i.e. polyethylene to which no additional components have been added. Alternatively, in order to ensure that the second layer has adequate stability during processing and exposure to elevated temperatures, if the first layer comprises carbon black-loaded high density polyethylene, the second layer often comprises high density polyethylene which comprises 3 to 5% by weight of antioxidant and/or pigment (which may be carbon black in some applications).

The second layer contacts the first layer in the heat-recoverable article of the invention. For most articles, the second layer covers substantially all (i.e. at least 80% of the surface area) of one side of the first layer. It is generally important that the adhesion between the first and second layers be good to avoid delamination of the layers during recovery onto the substrate and subsequent use. Both the components added to the first and/or second layers and the viscosities of the compositions of the two layers contribute to the adhesion between the layers. Both the first and the second layers are normally extruded or otherwise melt-shaped. They may be attached to one another through any suitable means, e.g. lamination under heat and pressure (compression molding), dual extrusion, or coextrusion. In a dual extrusion, either the first or the second layer is extruded and, in a second step, the other layer is extruded over it. In a coextrusion process, both the first and second layers are extruded simultaneously and brought into contact with one another. The layers may be crosslinked either before or after they are attached, although because it is often more difficult to achieve good adhesion with crosslinked polymer compositions, the crosslinking is generally conducted after attachment. The crosslinked article is then expanded to an extent determined by the desired end use.

The thickness of the first and the second layers is dependent on the type and size of the substrate and the strength required by the article in its recovered state. Generally, the two layers, when formed into an article, have an unexpanded thickness of 0.25 to 3.8 mm (0.010 to 0.150 inch). For many applications, if the heat-recoverable article has a thickness of 10x in the unrecovered state, the first layer has a thickness of lx to 5x, preferably lx to 3x, and the second layer has a thickness of 5x to 9x, preferably 7x to 9x, wherein x is 0.025 to 0.38 mm (0.001 to 0.015 inch), preferably 0.10 to 0.38 mm (0.004 to 0.015 inch). For articles of this type, the first layer has a thickness which is at least 0.13 mm (0.005 inch) and comprises a particulate filler such as carbon black to achieve adequate protection against ultraviolet radiation. The second layer of articles of this type comprises a composition which contains no filler.

Articles of the invention comprise an adhesive layer which contacts the surface of the second layer away from the first layer. The adhesive may comprise a hot-melt adhesive or a mastic. A hot-melt adhesive is a thermoplastic composition which is a solid at room temperature but which melts, flows, and bonds at elevated temperature. The hot-melt adhesive can comprise any suitable polymer. Commonly used are polyamides and polyethylene copolymers or terpolymers. In addition, the hot-melt adhesive may comprise rubber, tackifier, pigments, stabilizers, antioxidants, and other components. A mastic is a noncrystalline material which exhibits cold flow and has tack at or near room temperature. Some mastics have a "self-healing" property, i.e. if the mastic is cut or punctured, the mastic flows to cover the opening and maintain the seal. This is particularly important when the second layer which the mastic contacts is punctured because the mastic can flow to seal the cut through the second layer. Mastics generally are prepared from amorphous polymers such as amorphous polypropylene, butyl rubber, or polyisobutylene, and often contain low molecular weight components such as asphalt or tackifier. During use, these low molecular weight components tend to come out of the mastic and cause it to swell. In addition, the low molecular weight components may cause other polymers to swell if they penetrate them. The process is accelerated by exposure to elevated temperature, e.g. greater than 50°C. If filler is present in a polymer, the susceptibility to swelling by the polymer due to the low molecular components in the mastic may be increased as the total crystallinity of the polymer will be iess than that of an unfilled polymer.

If the adhesive is present, it may be applied to the exposed surface of the second layer, i.e. the surface opposite to that in contact with the first layer, by any suitable means, e.g. extrusion, spin-coating, painting, or other coating technique.

In order to ensure that adequate heat has been applied to the heat-recoverable article to cause the adhesive layer, if present, to melt and flow, it is common to provide an thermal indicator on the outer (exposed) surface of the first backing layer. Such an indicator may be a thermochromic paint. Alternatively, the indicator may be an embossed pattern which changes texture, e.g. by "disappearing" to form a smooth surface, when heat is applied. Examples of heat-recoverable articles comprising such embossed patterns are described in U.S Patent Application No. 07/841,391 (Gruel et al; corresponding to International Publication No. WO93/17853 published 16/09/93 and related European Patent Application No. 0 628 144).

The article of the invention may be used as part of an assembly which comprises a substrate and the article which contacts the substrate. The substrate may be a pipe, pipe joint or weld, or other substrate such as a structural element, e.g. a riser, oil rig, or pier piling. The article of the invention is particularly suited to provide protection to structural elements which are in a splash zone and are subject to moisture, wave action, and sun.

The invention is illustrated by the drawing in which Figure 1 shows a heat-recoverable article 2 in the form of a polymeric tube recovered onto substrate 4 which is a pipe. Heat-recoverable article 2 is composed of first backing layer 6, second inner layer 8, and adhesive layer 10. Shown in Figure 2 is a cross-sectional view along line 2-2 of Figure 1.

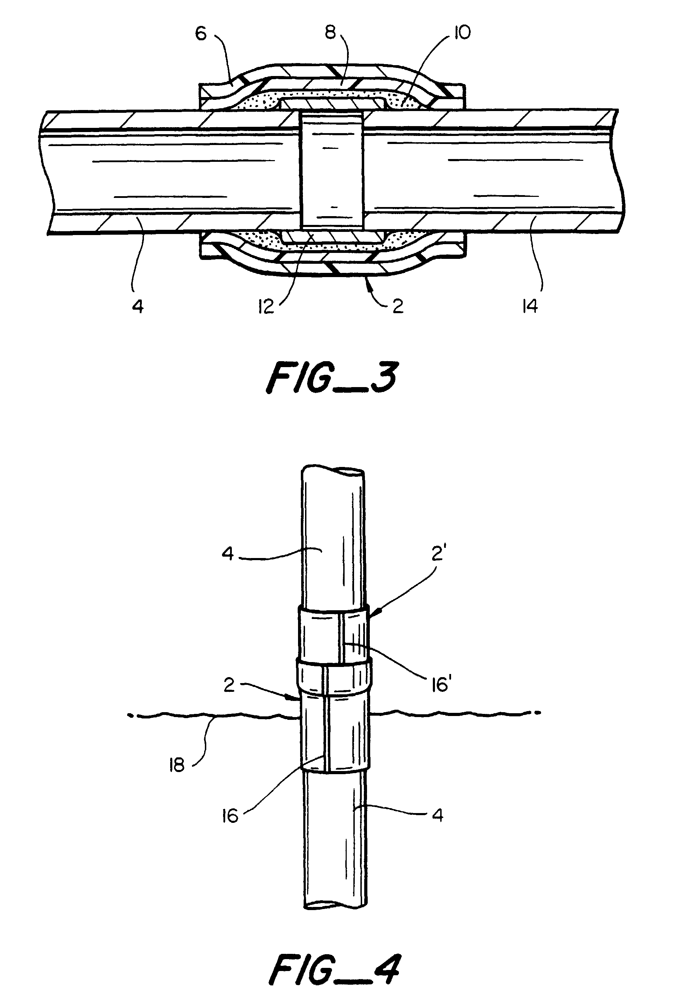

Figure 3 shows a cross-sectional view of a weld 12 between two pipes, 4,14. Heat-recoverable article 2 covers the weld 12, with adhesive layer 10 in direct contact with the weld and second inner layer 8. First backing layer 6 provides environmental protection for the weld.

Figure 4 shows a plan view of a substrate 4 which is a support element for a pier. The support element is immersed at least partly in water 18. Two heat-recoverable articles, 2,2', are recovered onto the substrate 4, one article 2, overlapping the second article 2'. Each of these articles 2,2' comprises a wraparound sheet which has been wrapped around the substrate 4, closed with closure means 16,16', and recovered onto the substrate 4.

The invention is illustrated by the following examples.

### Example 1 (Comparative Example)

A backing layer was prepared by compounding a mixture of high density polyethylene, ethylene/methyl acrylate copolymer, ethylene-propylene diene rubber (EPDM), carbon black, and antioxidants, and then extruding the mixture to produce a sheet with a thickness of 1.0 mm (0.040 inch). The backing layer was irradiated to achieve a crosslinking level which produced a modulus (M₁₀₀) at 150°C of 40 psi (276 kPa), then expanded 28%, and cooled. A 1.5 mm (0.060 inch) thick layer of asphalt-containing mastic was then coated onto one side of the backing layer. The article thus prepared was tested and the results are shown in Table I.

The adhesion of the recovered article to the pipe was measured at room temperature (approximately 23°C) following the peel strength test procedure of ASTM D-1000.

In that test, the article was recovered onto a pipe with an outer diameter of 51 mm (2 inch). The article-covered pipe was then cut into rings with a length of 25 mm (1 inch) to give test specimens. The recovered backing on each specimen was cut parallel to the direction of the pipe to create a free end which was clamped in the jaw of an Instron™ tester. The jaw separation speed of the Instron tester was set at 254 mm/minute (10 inches/minute) and the amount of force required to peel the layer from the pipe was recorded as pounds/linear inch. The type of failure, i.e. either cohesive failure (CF) or adhesive failure (AF), was also noted.

The resistance to cathodic disbonding of the recovered article was measured following the procedure of ASTM G-8, In that test, the mastic-coated backing layer was recovered onto a shot-blasted steel pipe with an outer diameter of 51 mm (2 inches). The end of the pipe which was to be immersed was sealed with a watertight end cap. A hole (holiday) was drilled through the backing and the mastic (but not through the pipe) in the center of the pipe to expose the metal surface of the pipe at that point. The pipe was then immersed in an electrolyte solution comprising water and 1% by weight of each of sodium chloride, sodium sulfate, and sodium carbonate. A potential of 1.5 volts was applied to the pipe, thus making the pipe a cathode in the electrolyte solution which also contained a sacrificial anode. The sample and electrolyte solution were maintained at 23°C for 30 days. The pipe was then removed and the area around the holiday inspected to determine the extent of disbondment. The approximate radius of the disbondment area surrounding the holiday was measured in millimeters (mm) and recorded.

The resistance to swelling of the recovered article was measured by recovering the mastic-coated backing layer onto a pipe with an outer diameter of 0.15 m (6 inch). The pipe was then stored in an oven at 70°C. Periodically, the pipe was removed from the oven and visually observed to determine if the mastic layer was still tightly bound to the pipe or if it had swelled and pulled away from the pipe. The length of time required until swelling occurred was recorded.

The tensile strength and the ultimate elongation (i.e. elongation to break) were measured according to ASTM D-638. A dumbbell-shaped specimen was cut from the recovered backing layer and the specimen was clamped into the jaws of an Instron tester. The sample was then allowed to equilibrate to the desired temperature. Using a crosshead speed of 51 mm/minute (2 inch/minute), the sample was stretched until it broke. The highest load supported by the specimen before breaking was recorded and used to calculate the tensile strength, and the length of the specimen at break was recorded and used to calculate the % elongation.

The impact resistance of the recovered article was determined following the procedure of ASTM G-14, except that the test pipe had a diameter of 0.10 m (4 inch) rather than 51 mm (2 inch). In that test, a weight of 1.36 kg (3 lbs) with a "nose" of 15.9 mm (0.625 inch) was dropped from successively greater heights onto the 0.10 m (4 inch) diameter pipe sample containing the recovered article. Following each drop, the article was inspected to determine if a holiday could be detected. The maximum height from which the weight could be dropped without creating a holiday was recorded.

### Example 2

Using a dual extrusion process, an inner layer comprising high density polyethylene which contained no particulate filler or other components and having a thickness of 0.76 mm (0.030 inch) was extruded first. On top of the inner layer a backing layer as in Example 1 with a thickness of 0.25 mm (0.010 inch) was then extruded. This composite sheet was irradiated to produce an M₁₀₀ value at 150°C of 40 psi, was then expanded 28%, and was coated with a 1.5 mm (0.060 inch) layer of mastic as in Example 1. The article was tested as in Example 1 and the results are shown in Table I.

### Example 3

Using a coextrusion process, a composite sheet containing an inner layer and a backing layer as in Example 2 was prepared. The composite sheet was irradiated (M₁₀₀ at 150°C was 31 psi), expanded 28%, and coated as in Example 1. The article was tested as in Example 1 and the results are shown in Table I.

**TABLE I**

| Test Results for Recovered Articles | | | |
|---|---|---|---|
| Example | 1 | 2 | 3 |
| Peel strength (23°C)/ Type failure | 12-14/CF | 12.5/CF | 20.7/CF |
| Cathodic Disbonding Radius (mm) | 0-10 | 0 | 3 |
| Swelling | Seen after 4 days | None after 7 months | None after 5 months |
| Tensile Strength (psi) | | | |
| 23°C | 2500 | Not tested | 3993 |
| 80°C | 1150 | | 2119 |
| 100°C | 640 | | 1237 |
| Elongation to Break | | | |
| 23°C | 580% | Not tested | 746% |
| 80°C | 650% | | 1053% |
| 100°C | 650% | | 1320% |
| Impact Resistance (m-kg) | 0.55 | Not tested | 0.87 |
| (inch-pounds) | (48) | | (75) |

### Example 4 (Comparative)

Following the procedure of Example 1, a backing layer with a thickness of 1.0 mm (0.040 inch) was prepared, irradiated, and expanded to a thickness of approximately 0.81 mm (0.032 inch). The backing layer was then coated with approximately 1.0 mm (0.040 inch) of a polyethylene-based hot-melt adhesive, and was then recovered onto a 0.41 m (16 inch) long steel pipe with an outer diameter of 0.10 m (4 inch) to provide an installed thickness of the article of about 1.83 mm (0.072 inch). When tested as in Example 1, the impact resistance was 0.87 m-kg (75 inch-pounds).

### Example 5 (Comparative)

A heat-recoverable article was prepared by embedding a closed weave glass fiber sheet between two sheets of low density polyethylene. Suitable glass fiber sheet is disclosed is U.S. Patent No. 4,626,458 (Pithouse et al, filed December 30, 1983) and European Patent Publication No. 430,377 (Raychem Corporation, published June 5, 1991). The sheet was expanded to a thickness of 2.2 mm (0.085 inch) and coated with a polyamide-based hot melt adhesive to produce an article with a thickness of about 3.18 mm (0.125 inch). A pipe with an outer diameter of 0.10 m (4 inch) was coated with a primer (described in U.S. Patent Nos. 4,732,632, issued March 22, 1988, and 4,997,685, issued March 5, 1991, and the article was recovered over the primer to provide an installed thickness of 3.51 mm (0.138 inch). When tested as in Example 1, this article had an impact resistance of 1.69 m-kg (146 inch-pounds).

### Example 6

Following the procedure of Example 3, a composite sheet was prepared comprising a backing layer with a thickness of 0.25 mm (0.010 inch) and an inner layer with a thickness of 1.78 mm (0.070 inch). The sheet was irradiated, expanded, coated with a polyethylene-based hot-melt adhesive (about 0.76 mm (0.030 inch) thick), and recovered onto a pipe as in Example 4 to provide an installed thickness of the article of about 2.41 mm (0.095 inch). The impact resistance was determined as in Example 1. For this article, the impact resistance was 1.66 m-kg (144 inch-pounds).

### Example 7

An article was prepared as in Example 6 and was then recovered onto a primer coated pipe as in Example 5. When tested as in Example 1, this article had an impact resistance of more than 1.96 m-kg (170 inch-pounds), greater than the limits of the testing apparatus.

## Claims

1. A heat-recoverable article which comprises
(a) a first polymeric backing layer comprising a particulate filler;
(b) a second polymeric inner layer which is substantially free of particulate filler; and
(c) an adhesive layer which comprises a material which is capable of swelling the first layer;
the second polymeric inner layer contacting and lying between the first layer and the adhesive layer.

2. An article according to claim 1 wherein the adhesive layer comprises a mastic.

3. An article according to claim 2 wherein the mastic comprises asphalt.

4. An article according to claim 1 wherein the first layer comprises polyethylene.

5. An article according to any one of the preceding claims which has a thickness of 10x, wherein
(a) the first polymeric backing layer has a thickness which is at least 0.13 mm (0.005 inch) and is lx to 5x; and
(b) the second polymeric inner layer has a thickness of 5x to 9x.

6. An article according to claim 5 wherein x is 0.025 to 0.38 mm (0.001 to 0.015 inch).

7. An article according to claim 5 or 6 wherein (i) the particulate filler of the first layer comprises carbon black, and (ii) the first layer has a resistivity of at least 1 x 10⁹ ohm-cm.

8. An article according to any one of the preceding claims wherein the article has been made by a coextrusion process.

9. An assembly which comprises
(1) a substrate; and
(2) a heat-recoverable article according to any one of the preceding claims.

10. An assembly according to claim 9 wherein the substrate is part of a pier.

## Patentansprüche

1. Wärmerückstellbarer Gegenstand, der folgendes aufweist:
(a) eine erste polymere Verstärkungsschicht, die einen teilchenförmigen Füllstoff aufweist;
(b) eine zweite polymere innere Schicht, die im wesentlichen frei von teilchenförmigem Füllstoff ist; und
(c) eine Klebstoffschicht, die ein Material aufweist, das imstande ist, die erste Schicht zum Quellen zu bringen;
wobei die zweite polymere innere Schicht mit der ersten Schicht und der Klebstoffschicht in Kontakt steht und zwischen diesen liegt.

2. Gegenstand nach Anspruch 1,
wobei die Klebstoffschicht einen Mastix aufweist.

3. .Gegenstand nach Anspruch 2,
wobei der Mastix Asphalt aufweist.

4. Gegenstand nach Anspruch 1,
wobei die erste Schicht Polyethylen aufweist.

5. Gegenstand nach einem der vorhergehenden Ansprüche, der eine Dicke von 10x hat, wobei
(a) die erste polymere Verstärkungsschicht eine Dicke hat, die wenigstens 0,13 mm (0,005 inch) ist und 1x bis 5x beträgt; und
(b) die zweite polymere innere Schicht eine Dicke von 5x bis 9x hat.

6. Gegenstand nach Anspruch 5,
wobei x einen Wert von 0,025 bis 0,38 mm (0,001 bis 0,015 inch) hat.

7. Gegenstand nach Anspruch 5 oder 6,
wobei (i) der teilchenförmige Füllstoff der ersten Schicht Ruß aufweist und (ii) die erste Schicht einen spezifischen Widerstand von wenigstens 1 x 10⁹ Ohm-cm hat.

8. Gegenstand nach einem der vorhergehenden Ansprüche,
wobei der Gegenstand durch ein Coextrusionsverfahren hergestellt ist.

9. Anordnung, die folgendes aufweist:
(1) ein Substrat; und
(2) einen wärmerückstellbaren Gegenstand nach einem der vorhergehenden Ansprüche.

10. Anordnung nach Anspruch 9,
wobei das Substrat Teil eines Piers ist.

## Revendications

1. Article doué de reprise de forme à chaud, qui comporte
(a) une première couche dorsale polymérique comprenant une charge en particules ;
(b) une seconde couche intérieure polymérique qui est substantiellement exempte de charge en particules ; et
(c) une couche d'adhésif qui comprend une matière capable de faire gonfler la première couche ;
la seconde couche intérieure polymérique étant en contact avec et s'étendant entre la première couche et la couche d'adhésif.

2. Article selon la revendication 1, dans lequel la couche d'adhésif comprend un mastic.

3. Article selon la revendication 2, dans lequel le mastic comprend un asphalte.

4. Article selon la revendication 1, dans lequel la première couche comprend du polyéthylène.

5. Article selon l'une quelconque des revendications précédentes, qui a une épaisseur de 10x, dans lequel
(a) la première couche dorsale polymérique a une épaisseur qui est d'au moins 0,13 mm (0,005 inch) et est de 1x à 5x ; et
(b) la seconde couche intérieure polymérique a une épaisseur de 5x à 9x.

6. Article selon la revendication 5, dans lequel x est de 0,025 à 0,38 mm (0,001 à 0,015 inch).

7. Article selon la revendication 5 ou 6, dans lequel (i) la charge en particules de la première couche comprend du noir de carbone et (ii) la première couche a une résistivité d'au moins 1 x 10⁹ ohms.cm.

8. Article selon l'une quelconque des revendications précédentes, dans lequel l'article a été réalisé par un procédé de co-extrusion.

9. Assemblage qui comporte
(1) un substrat ; et
(2) un article doué de reprise de forme à chaud selon l'une quelconque des revendications précédentes.

10. Assemblage selon la revendication 9, dans lequel le substrat est une pièce d'une jetée.
